# EUROPEAN PATENT APPLICATION

(11) **EP 1 926 186 A1**
(43) Date of publication of application: **28.05.2008**
(21) Application number: 06783188.3
(22) Date of filing: 05.09.2006
(51) Int. Cl.: H01S 3/06, H01S 3/094

(54) **FIBER LASER DEVICE HAVING EXCITATION LIGHT SOURCE PROTECTION DEVICE**

(30) Priority: 14.09.2005 JP 2005266316
(71) Applicant: CENTRAL GLASS COMPANY, LIMITED, Ube-shi, Yamaguchi-ken 755-0001 (JP)
(72) Inventor: TESHIMA, Takuya, 532-10,Shimotano, Nasushiobara-shi, Tochigi 329-2811 (JP); KUBOTA, Yoshinori, 532-10,Shimotano, Nasushiobara-shi, Tochigi 329-2811 (JP)
(74) Representative: Manitz, Finsterwald & Partner GbR
(86) International application number: PCT/JP2006/317550
(87) International publication number: WO 2007/032229

(57) **Abstract**

In a fiber laser device equipped with at least a pumping source, a rare-earth element doped fiber and a resonator, there is provided the fiber laser device equipped with a pumping source protecting device that is between the pumping source and the resonator, that prevents a laser light generated by the resonator from being incident on the pumping source, and that has no isolator function.

## Description

### TECHNICAL FIELD

The present invention relates to a fiber laser device equipped with a pumping source protecting device.

### BACKGROUND OF THE INVENTION

In recent years, the progress of the technology for obtaining laser light by using a rare-earth element doped fiber, particularly that of the fiber laser technology of the processing use, is remarkable. Hitherto, the technology for obtaining a laser that is shorter in wavelength than the visible light by using the up-conversion process has also been studied, and it has become possible to obtain lasers of various wavelengths by fiber laser (Non-patent Publication 1 and Patent Publication 1).
Non-patent Publication 1: "Erbium-doped Optical Fiber Amplifiers", edited by Shoichi Sudo; The Optronics Co., Ltd. (2002)
Patent Publication 2: Japanese Patent Application Publication 2005-26475

### SUMMARY OF THE INVENTION

However, depending on the construction such as pumping source, rare-earth element doped fiber, resonator and the like, and on the wavelength of a laser to be obtained, there has been a problem in which an oscillated laser light is incident on the pumping source to damage the pumping source.

Isolator is used for the purpose of protecting the pumping source from the returning light of the pumping light. Since there exists an absorption in isolator with respect to a wavelength that is different from the pumping light, it may result in protecting the pumping source. However, since it is not designed for such purpose, there have been uncertainty and problems in use. Depending on the wavelength of the pumping source, there has been a problem in which isolator has a high price and is not for general-purpose.

The present invention was made in view of the above situation, and its object is to provide a stable laser device by preventing damage of the pumping source due to the oscillated laser light.

According to the present invention, in a fiber laser device equipped with at least a pumping source, a rare-earth element doped fiber and a resonator, there is provided the fiber laser device equipped with a pumping source protecting device that is between the pumping source and the resonator, that prevents a laser light generated by the resonator from being incident on the pumping source, and that has no isolator function.

### BRIEF DESCRIPTION OF THE DRAWINGS

Fig. 1 shows one of the lowest price constructions of a fiber laser device equipped with a pumping source protecting device according to the present invention;
Fig. 2 shows a construction having no pumping source protecting device in Fig. 1;
Fig. 3 shows one construction having a pumping source protecting device equipped with a laser light reflecting mirror in a fiber laser device in the present invention; and
Fig. 4 shows a construction having no pumping source protecting device in Fig. 3.

### DETAILED DESCRIPTION

The present invention can be used for applied fields of optical transmission, such as evaluation and measurement, too, as well as communication system in optical communication field.

The above pumping source protecting device is, for example, a device that attenuates a laser light generated by a resonator, by at least one method selected from absorption, reflection, scattering and branching.

The above fiber laser device is, for example, a fiber laser device wherein the pumping source contains at least one diode laser, wherein the rare-earth element doped fiber is a rare-earth-doped fluoride fiber or rare-earth-doped fluorine oxide fiber, and wherein the wavelength of the laser light generated by the resonator is a shorter wavelength relative to the wavelength of the pumping source.

Furthermore, the above fiber laser device is, for example, a fiber laser device wherein the pumping source contains at least a diode laser of a 0.5-1.1µm band, wherein the rare-earth element doped fiber is a fluoride fiber, in which at least a core portion is doped with at least one rare-earth element selected from Er, Tm, Pr, Nd and Ho, and wherein the laser light generated by the resonator is a visible light of from 300nm to 800nm.

Furthermore, the above fiber laser device is, for example, a fiber laser device wherein absorption of the rare-earth element doped fiber is used as a laser light shielding means of the pumping source protecting device.

Furthermore, the above fiber laser device is, for example, a fiber laser device wherein the rare-earth element in the rare-earth element doped fiber is at least one of Pr, Nd, Sm, Eu, Tb, Dy, Ho, and Tm.

It is possible to obtain a fiber laser device that prevents damage of the pumping source and operates stably, by arranging, between the pumping source and the laser resonator, the pumping source protecting device that prevents or suppresses the incidence of the generated laser light on the pumping source.

In the present invention, it is equipped with at least a pumping source, a rare-earth element doped fiber and a resonator, and a protecting device for preventing a laser light oscillated by a resonator from being incident on the pumping source is put between the pumping source and the resonator, for solving the above task. One having a small loss relative to the pumping light is used as the protecting device. However, it prevents the pumping source from receiving damage by the laser light going into the pumping source, by at least one method of reflection, absorption and scattering. As a result, it is possible to obtain a fiber laser device with a stable output.

In the following, the present invention is described in detail, while referring to the attached drawings.

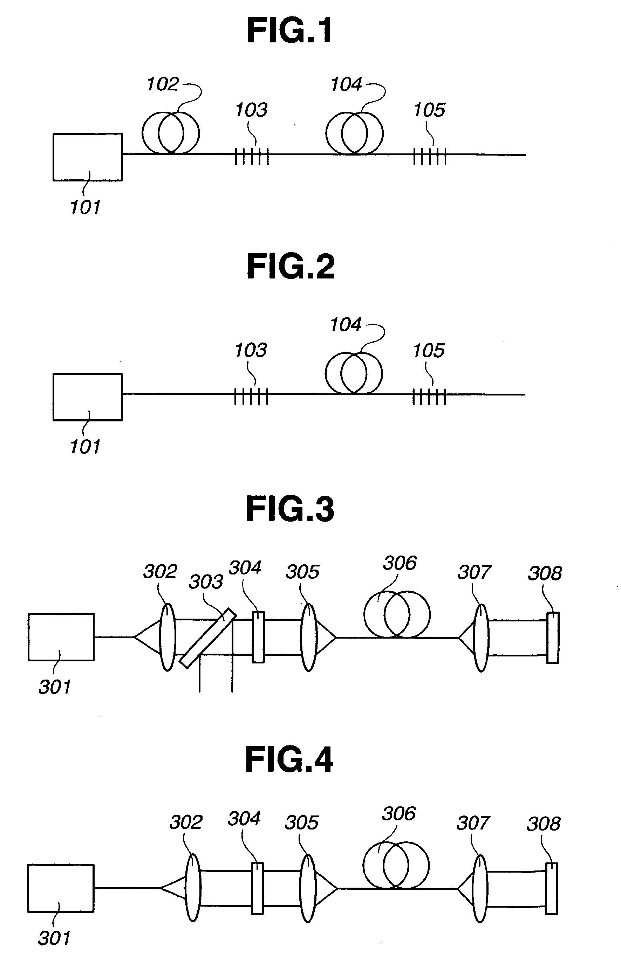

Fig. 1 is a schematic view showing an example of the fiber laser device of the present invention. The fiber laser is composed of a pumping source 101, a first fiber Bragg grating 103, a rare-earth element doped fiber 104, a second fiber Bragg grating 105, and a pumping source protecting device 102 (laser light absorbing fiber).

Since the pumping source 101 is one for activating a rare-earth element in the rare-earth element doped fiber 104, it is not limited to diode laser, nor to this wavelength. Depending on the type of the rare-earth element and the wavelength of the laser light to be obtained, it must be replaced with a suitable one. For example, it is possible to use diode laser, fiber-coupled diode laser, diode-pumped solid-state laser, diode-pumped fiber laser, diode-pumped Raman laser, and wavelength-converted lasers of these.

A Fabry-Perot type resonator is formed by using the first fiber Bragg grating 103 and the second fiber Bragg grating 105. Fiber Bragg grating (FBG) is very convenient in respect of that construction of a coupling system through space may be omitted. However, a general fiber Bragg grating has a sharp reflection peak relative to wavelength. Therefore, as this example, the reflection peak wavelengths must be sufficiently matched between the first fiber Bragg grating 103 and the second fiber Bragg grating 105. In some cases, it is possible to improve the degree of matching of reflection wavelengths of both fiber Bragg gratings by using a fiber Bragg grating having a wide-band reflection characteristic for either of them.

It is not particularly limited to using fiber Braggs grating. It suffices to reflect the light of a particular wavelength out of a gain wavelength band that makes laser oscillation by the resonator possible. For example, either of the first fiber Bragg grating 103 and the second fiber Bragg grating 105 may have a structure of reflection mirror, or both may be mirrors.

It is not problematic at all even if it is a ring-type resonator or a combined resonator such as resonator formed of a plurality of rings, not making a Fabry-Perot type resonator using fiber Bragg grating as this example. Furthermore, it is optional to insert space coupling type optical parts, such as etalon for a narrower band and diffraction grating for wavelength variability, into the resonator.

In the case of using a laser light absorbing fiber for the pumping source protecting device 102, it is possible to determine the rare-earth element that can be added to the laser light absorbing fiber, depending on the wavelength of the pumping source and the wavelength of the laser to be obtained. Examples are shown in Table 1. Besides, it is also possible to use transition element doped fiber, fine crystal dispersed fiber, and the like. It is necessary to have a small loss against the pumping source and a large loss, such as absorption and scattering, against the obtained laser light.

**[Table 1]**

| Rare-earth Elements Added to Fiber Laser | Pumping Wavelength | Color of Laser | Rare-earth Elements Addable to Laser Light Absorbing Fiber |
|---|---|---|---|
| Er, Er+Yb | 980nm Band | Green | Ho, Tb, Pr |
| Tm | 800nm Band | Blue | Pr, Sm, Ho |
| Tm+Yb | 980nm Band | Blue | Tm, Pr, Nd, Sm, Ho |
| Pr+Yb | 980nm Band | Red, Green, Blue | Pr, Ho, Nd, Sm |
| Nd | 800nm Band | Ultraviolet | Sm, Eu, Tb, Ho |
| Nd+Yb | 980nm Band | Ultraviolet | Nd, Sm, Eu, Ho, Tb, Tm |
| Ho+Yb | 980nm Band | Green | Ho, Nd |

The pumping source protecting device 102 is one for protecting the pumping source from the laser light leaking from the resonator. Therefore, it must be arranged between the resonator and the pumping source. Specifically, it must be installed between the pumping light and a multiplexing element for introducing the pumping light into the resonator. As the multiplexing element, it is possible to use a FBG having dichroic function, melting extension fiber element, dichroic mirror, and the like.

Although laser light absorbing fiber is used in the present example, it is not limited to this method. As another one, a filter that selectively absorbs a particular wavelength is used. Furthermore, there is a method using reflection, scattering or branching.

If attenuation factor of the laser light in question has not sufficiently been obtained, the same means may be used in series, or a plurality of methods may be used at the same time.

### EXAMPLE 1

In the following, the present invention is described by citing

### examples.

Fig. 1 is a schematic view showing a fiber laser device of Example 1. The fiber laser is composed of a pumping source 101, a first fiber Bragg grating 103, a rare-earth element doped fiber 104, a second fiber Bragg grating 105, and a pumping source protecting device 102 (laser light absorbing fiber). As the pumping source 101, a diode laser having a wavelength of 974nm was used. A Fabry-Perot type resonator was formed by using the first fiber Bragg grating 103 and the second fiber Bragg grating 105. Those, in which reflectance of the first fiber Bragg grating 103 was 99% at 543nm in wavelength and in which wavelength of the second fiber Bragg grating 105 was 80% at 543nm in wavelength, were used.

As the pumping source protecting device 102 (laser light absorbing fiber), there was used a holmium-doped fluoride fiber having a holmium doping concentration of 3000 ppm and a length of 100cm. By absorption of holmium, the laser light of 543nm is attenuated by 65dB or greater, but the pumping light, a light of 974nm, is almost not attenuated.

As the rare-earth element doped fiber 104, an erbium-doped fluoride fiber having a length of 200cm was used in the present embodiment.

The pumping light coming out of the pumping source 101 activates erbium in an erbium-doped fluoride fiber, which is the rare-earth element doped fiber 104. With this, the erbium-doped fluoride fiber generates an ASE light near 543nm. Of the ASE light, the light of 543nm in wavelength is reflected by the first fiber Bragg grating 103 and the second fiber Bragg grating 105 to gradually obtain a gain and to have a laser oscillation between the first fiber Bragg grating 103 and the second fiber Bragg grating 105. The laser light of 543nm in wavelength is outputted mainly from the second fiber Bragg grating 105 side, but it is also outputted from the first fiber Bragg grating 103 side. This laser tries to be incident on the pumping source 101. However, the pumping source protecting device 102 absorbs the laser light outputted from the first fiber Bragg grating 103 side. Therefore, in the end, the laser light outputted from the first fiber Bragg grating 103 side does not affect the pumping source 101. As a result, the pumping source 101 is protected from the oscillated laser and can operate stably. As a result of the above, there was obtained a laser device that operated stably.

In the fiber laser device of such a structure, a pumping power was inputted by 500mW from the pumping source 101. As a result, an output of 5mW was obtained.

(COMPARATIVE EXAMPLE 1) Comparative Example 1 was conducted by the same structure as that of Example 1, except that the pumping source protecting device was missing. It is shown in Fig. 2. Due to that the pumping source protecting device was missing, the pumping source was damaged at the same time when an oscillation of 543nm in wavelength was confirmed.

### EXAMPLE 2

Fig. 3 is a schematic view showing a fiber laser device of Example 2. The fiber laser is composed of a pumping source 301, a first lens 302, a first resonator mirror 304, a second lens 305, a rare-earth element doped fiber 306, a third lens 307, a second resonator mirror 308, and a pumping source protecting device 303 (laser light reflecting mirror). A pumping source 301 and a rare-earth doped fiber 306, which were the same as those of Example 1, were used.

Dielectric multilayer films were used as the first resonator mirror 304 and the second resonator mirror 308. The first resonator mirror 304 passes 98% of the pumping light and reflects 99% of a light of 550nm band. The second resonator mirror 308 reflects 96% of the pumping light and reflects 60% of a light of 550nm band.

As the first lens 302, the second lens 305 and the third lens 307, collimator lens were used. As the pumping source protecting device 303 (laser light reflecting mirror), there was used a dielectric multilayer film filter that reflected 99% or greater of a light of 550nm band upon 45° incidence.

The pumping light coming out of the pumping source 301 is collimated by the first lens 302. The pumping light transmitted through the first resonator mirror 304 is concentrated by the second lens 305, and is incident on the input end of the rare-earth element doped fiber 306, thereby having a laser oscillation between the first resonator mirror 304 and the second resonator mirror 308. The laser light is outputted mainly from the second resonator mirror 308 side, but it is also outputted from the first resonator mirror 304 side. This laser tries to be incident on the pumping source 301. However, a laser light reflecting mirror as the pumping source protecting device 303 reflects a laser light outputted from the first resonator mirror 304 side. Therefore, in the end, the laser light outputted from the first resonator mirror 304 side does not affect the pumping source 301. As a result, the pumping source 301 is protected from the oscillated laser and can operate stably. As a result of the above, there was obtained a laser device that operated stably.

In the fiber laser device of such a structure, a pumping power was inputted by 500mW from the pumping source 301. As a result, an output of 1mW was obtained.

(COMPARATIVE EXAMPLE 2) Comparative Example 2 was defined as a case in which the pumping source protecting device of Example 2 was missing. It is shown in Fig. 4. Oscillation of 543nm in wavelength was confirmed, but the pumping source was gradually damaged due to that the pumping source protecting device was missing. The output of the pumping source lowered, and the laser output of 550nm band lowered, too. Therefore, it was not possible to have a stable laser.

## Claims

1. In a fiber laser device equipped with a pumping source, a rare-earth element doped fiber and a resonator, the fiber laser device being equipped with a pumping source protecting device that is between the pumping source and the resonator, that prevents a laser light generated by the resonator from being incident on the pumping source, and that has no isolator function.

2. A fiber laser device according to claim 1, wherein the pumping source protecting device attenuates a laser light generated by the resonator, by at least one method selected from absorption, reflection, scattering and branching.

3. A fiber laser device according to claim 1 or claim 2, wherein the pumping source contains at least one diode laser, wherein the rare-earth element doped fiber is a rare-earth-doped fluoride fiber or rare-earth-doped fluorine oxide fiber, and wherein wavelength of the laser light generated by the resonator is a shorter wavelength relative to wavelength of the pumping source.

4. A fiber laser device according to claim 3, wherein the pumping source contains at least a diode laser of a 0.5-1.1µm band, wherein the rare-earth element doped fiber is the fluoride fiber, in which at least a core portion is doped with at least one rare-earth element selected from Er, Tm, Pr, Nd and Ho, and wherein the laser light generated by the resonator is a visible light of from 300nm to 800nm.

5. A fiber laser device according to claim 4, wherein absorption of a rare-earth element doped fiber is used as a laser light shielding means of the pumping source protecting device.

6. A fiber laser device according to claim 5, wherein a rare-earth element in the rare-earth element doped fiber is at least one of Pr, Nd, Sm, Eu, Tb, Dy, Ho, and Tm.
